(19) Europäisches Patentamt
European Patent Office
Office européen des brevets

(11) Publication number: 0 129 913 B1

(12) **EUROPEAN PATENT SPECIFICATION**

(45) Date of publication of patent specification: **09.08.89**

(51) Int. Cl.$^4$: **C 08 F 222/04**, C 08 F 210/14, C 09 D 3/74

(21) Application number: **84107406.5**

(22) Date of filing: **27.06.84**

(54) **Alphaolefin terpolymer and coating composition including said terpolymer.**

(30) Priority: **28.06.83 US 508697**
**28.06.83 US 508698**

(43) Date of publication of application:
**02.01.85 Bulletin 85/01**

(45) Publication of the grant of the patent:
**09.08.89 Bulletin 89/32**

(84) Designated Contracting States:
**AT BE CH DE FR GB IT LI LU NL SE**

(56) References cited:
**EP-A-0 066 798**
**US-A-4 240 916**

(73) Proprietor: **S.C. JOHNSON & SON, INC.**
**1525 Howe Street**
**Racine, Wisconsin 53403 (US)**

(72) Inventor: **Verbrugge, Calvin J.**
**1031 Ohio Street**
**Racine, WI 53405 (US)**
Inventor: **Hansen, Frederick C.**
**19022 - 58th Road**
**Union Grove, WI 53182 (US)**
Inventor: **Kiehlbauch, Richard A.**
**1649 Meadow Lane Avenue**
**Racine, WI 53406 (US)**

(74) Representative: **Baillie, Iain Cameron et al**
**c/o Ladas & Parry Isartorplatz 5**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to terpolymers of an anhydride, aromatic mono-alkenyl monomer selected from the group consisting of styrene, alphamethyl styrene, vinyl toluene and mixtures thereof and 1-alkene having more than 18 carbon atoms, and novel coating compositions containing said terpolymers.

Maleic anhydride alphaolefin copolymers are well known as are maleic anhydride alphaolefin terpolymers; see U.S. Patents 3,533,177; 3,560,455; 3,560,456; 3,560,457; 4,358,573; 4,151,069 and 4,240,916. The first four patents describe copolymers and the like anhydride with specific alphaolefins, such as $C_{12}$ alphaolefin, $C_{16-18}$ alphaolefin and $C_{30}$+ alphaolefins. The last three patents describe terpolymers of maleic anhydride with mixtures of alphaolefins.

Styrene maleic anhydride copolymers are described in a number of patents, including U.S. Patent Nos. 3,423,373, 3,277,116 and 3,256,296. These patents, however, are directed to copolymers of styrene and maleic anhydride and do not disclose terpolymers.

U.S. Patent No. 3,723,375, describes terpolymers of styrene and maleic anhydride along with a termonomer having the formula

$$R_2\text{-}\text{-}X\text{-}\text{-}\overset{\displaystyle Y \atop |}{C}{=}{=}CH_2,$$

where $R_2$ is an organic radical containing 6 to 35 carbon atoms, Y is hydrogen, halogen, alkyl or phenyl and X is oxygen, sulphur, carboxy, carbonamido or a chemical bond. In Column 4 this patent describes possible monomers having the above formula, including five alphaolefins from 1-decene to 1-eicosene. The terpolymers as described in this patent have a relatively small amount of the termonomer, that is, less than 15 mole per cent and the example where the termonomer is a 1-olefin no more than 3.5 mole per cent.

It has been surprisingly found that terpolymers comprising from 49 to 60 mole per cent of an anhydride, from 20 or more mole percent of monoalkenyl aromatic compounds selected from the group consisting of styrene, alphamethyl styrene, vinyl toluene and mixtures thereof, and 20 or more mole per cent of at least one 1-alkene having at least 18 carbon atoms can be prepared. Said terpolymer can also be prepared as an aqueous dispersion having low viscosity in alkali and other bases.

This invention also relates to novel coating compositions which include the terpolymers described herein. Attempts have been made to prepare substrate coatings containing terpolymers such as overprint varnishes and inks which have good slip and non-blocking characteristics. By this is meant that coating will not under the effect of temperature, pressure or a combination of temperature and pressure, soften or otherwise adhere to the surrounding coating, substrates and/or films. In high speed manufacturing processes of coated material, the substrate is quickly stacked after coating and if the non-blocking characteristic of the coating is poor, the articles may not properly stack or may adhere to surrounding coatings and substrates thereby ruining a portion of the product.

Surprisingly, a coating composition which comprises from 0.5 to 30 per cent by weight of the inventive terpolymer, from 1 to 55 per cent by weight of an acrylic emulsion polymer having a weight average molecular weight of greater than 20,000 and the balance aqueous vehicle, will impart excellent coating properties to the substrate such as clarity, gloss, rub resistance, etc. and also form a non-blocking coating with good slip characteristics.

It is therefore the primary object of the present invention to provide a novel terpolymer of styrene, maleic anhydride and an alphaolefin. Further advantages of the present invention include providing an aqueous alkaline dispersion of a terpolymer of styrene, maleic anhydride and an alphaolefin; providing a novel terpolymer of styrene, maleic anhydride and an alphaolefin which can be incorporated in an aqueous coating composition having good slip and non-blocking characteristics and providing a terpolymer composition which has good waxy properties characteristic of $C_{18}$ and higher alphaolefins and yet has water dispersibility and good hardness which provides a coating composition with good water resistance and dry-rub characteristics.

According to the present invention there is provided a terpolymer characterized by comprising 49 to 60 mole per cent of anhydride, from 20 or more mole percent of monoalkenyl aromatic compounds selected from the group consisting of styrene, alphamethyl styrene, vinyl toluene and mixtures thereof, and 20 or more mole per cent of at least one 1-alkene having at least 18 carbon atoms.

The terpolymer composition of the present invention also relates to an aqueous dispersion of a terpolymer of from 49 to 60 mole per cent of an anhydride, from 20 or more mole per cent of aromatic monoalkenyl compounds and mixtures thereof; and from 20 or more mole per cent of at least one 1-alkene having at least 18 carbon atoms, this dispersion having a viscosity at 25°C. of less than 20 centipoise [.20 grams/(cm.×sec.)] at 10 per cent solids content and having a pH within the range from 6.5 to 10.

It is noted above the terpolymers of the present invention include an anhydride. In addition to the preferred anhydride, maleic anhydride, certain other anhydrides can be utilized in the formation of the terpolymers of the present invention such di-methyl maleic anhydride, fluoro maleic anhydride, methyl ethyl maleic anhydride and the like. It is preferred that the anhydride be substantially free of acid before polymerization. As noted above, the preferred anhydride is maleic anhydride.

A second component of the terpolymers of the present invention is a higher 1-alkene, i.e., a 1-alkene having at least 18 carbon atoms. These materials may be pure materials, such as 1-octadecene or may be mixtures of various of 1-alkenes such as mixed $C_{20}$, $C_{22}$ and $C_{24}$ 1-alkenes. Suitable 1-alkenes for use in the terpolymers of the present invention include the following:

1-octadecene
1-eicosene
1-docosene
1-tetracosene
1-hexacosene
1-octacosene
1-triacontene
1-doctiracontene
1-tetratriacontene
1-hexatriacontene
1-octatriacontene
1-tetracontene
1-dotetracontene
1-tetratetracontene
1-hexatetracontene
1-octatetracontene
1-pentacontene
1-hexacontene
and mixtures thereof

Both pure alkenes and mixed alkenes can be utilized. Typical mixtures of C30+ 1-alkenes are described in U.S. Patent 3,553,177. Typically, these mixed higher alkenes are primarily even chain alpha-olefins. The higher 1-alkene should essentially be free of di-olefins as these materials can cause gel formation and cross linking. Although small amounts of di-olefins, typically less than 2 per cent, can be tolerated as impurity in the higher 1-alkene monomer, it is preferred that the level of saturates in the monomer be kept to a minimum generally less than 1 per cent and preferably less than 0.3 per cent, as the resulting polymer dispersions are hazy.

The preferred higher 1-alkenes are 1-eicosene, mixed $C_{20-24}$ 1-alkenes and mixtures thereof.

A third monomer in the terpolymers of the present invention is at least one monomer selected from the group of 1-alkenes having 4 to 16 carbon atoms, aromatic monoalkenyl compounds or mixtures thereof. Suitable monomers include styrene, alpha methyl styrene, vinyl toluene and the like. The preferred monomer is styrene. Generally, the monomers of the lower alkenes are included in minor portions less than 3 mole percent. The purpose of these monomers is to modify one or more properties of the resulting terpolymer. Suitable alkene monomers include divinylbenzene and the like.

Each of the above three monomers must be present in the terpolymers of the present invention in certain specific amounts in order to achieve the desired result. In other words, if too much aromatic monoalkenyl monomer is included, the waxy properties of the resultant terpolymers is reduced while if sufficient 1-alkene is not included, the materials do not have the appropriate waxy and slip properties.

As is well known in the art, polymers including maleic anhydride are essentially alternating polymers with maleic anhydride alternating between random comonomers. The alternating backbone occurs without regard to the relative ratio of the reactants. This phenomenon is described in various patents noted below relating to the process of preparing polymers of the instant application. Accordingly, terpolymers of the present invention will contain from 49 to 60 mole per cent of anhydride preferably maleic anhydride. The amount of monomer selected from the group of 1-alkenes having 4 to 16 carbon atoms, aromatic monoalkenyl compounds or mixtures thereof are present in the terpolymers of the present invention is from 20 to 40 mole per cent while the amount of 1-alkene having at least 18 carbon atoms, is similarly from 20 to 40 mole per cent. The preferred terpolymers of the present invention include from 49 to 55 mole per cent maleic anhydride and from to 20 to 30 mole per cent of aromatic monoalkenyl monomer and 20 to 30 mole per cent higher 1-alkene.

The polymers of the present invention may be prepared by any of a number of conventional polymerization processes including polymerization processes as set forth in U.S. re-issue patent 28475, U.S. 3,553,177, 3,560,445, 3,560,456, 3,560,457 and 3,488,311.

The terpolymers of the present invention are generally low molecular weight materials having a number average of molecular weight within the range of from 2,000 to 15,000 and preferably within the range of from 2,000 to 10,000.

One unexpected benefit of the terpolymers of the present invention is the ease with which solubilization of these polymers occurs. These polymers can be characterized as alkali soluble materials and can be prepared as alkali cuts having a solids content of up to 25 per cent polymer. Suitable alkali materials include ammonium hydroxide, potassium hydroxide and sodium hydroxide. The preferred base for solubilizing these polymers is ammonium hydroxide. It is surprising that compositions containing substantial percentages of alphaolefin can be solubilized at a relatively low viscosity over a relatively short period of time. This is contrasted with materials outside the scope of the present invention whereby those

containing high percentages of alphaolefin are difficulty soluble and do not produce a stable viscosity for an extended period of time.

These dispersions have a relatively low viscosity at moderate solids. Generally the viscosity of a 10 per cent solids aqueous solution of the terpolymer will be less than 20 centipoise [.20 grams/(cm.×sec.)] and preferably these dispersions will be less than 10 centipoise [.10 grams/(cm.×sec.)]. These viscosities are to be measured at room temperature. In some instances, it is necessary to heat the polymer to get it completely solubilized.

It is theorized that one reason for this solubility is that the terpolymers of the present invention go directly to a fluid system without passing through a gel region characteristic of polymers containing higher 1-alkenes. This greatly increases the flexibility in preparing solutions of these terpolymers for end uses.

The dispersions of the terpolymers of the present invention are useful to a wide range of coatings including use as release agents, slip agents, anti-blocking agents and the like. According to the present invention there is provided a coating composition from about 0.5 to 30 percent of the inventive terpolymer; from about 1 to 55 percent by weight of an emulsion polymer having a weight average molecular weight of greater than 20,000 and the balance being an aqueous vehicle.

As used in the instant specification and claims, the term "aqueous vehicle" includes water and mixtures of water with various water miscible solvents such as 2-butoxyethanol, 2-ethoxyethyl acetate, ethanol, n-propanol, 2-ethoxyethanol, aromatic petroleum distillates such as Solvesso 100® and Solvesso 150® from Exxon Corp., esters such as isopropyl acetate, ketones such as methylethyl ketone, etc.

The coating compositions of the present invention include from 0.5 to 30 percent by weight of a terpolymer comprising from 49 to 60 mole percent of at least one anhydride, 20 or more percent by weight of an aromatic monoalkenyl monomer selected from the group consisting of styrene, alphamethyl styrene, vinyl toluene and mixtures thereof, and 20 or more mole percent of at least one 1-alkene having at least 18 carbon atoms. The preferred terpolymers for use in the coating compositions of the present invention include those terpolymers wherein the anhydride is maleic anhydride and the second monomer is styrene. Most preferred terpolymers include polymers where the second monomer is styrene. These most preferred terpolymers add better scratch resistance and better adhesion to the coating. Preferred terpolymers comprise from 49 to 55 per cent by weight maleic anhydride, 20 to 30 per cent by weight styrene and 20 to 30 per cent by weight higher 1-alkene. Examples of suitable terpolymers include terpolymers of maleic anhydride, styrene and 1-eicosene; maleic anhydride, styrene and mixed C20—24 1-alkene, and maleic anhydride, styrene and 1-octadecene.

As noted above, the terpolymers are present in the composition in the amount of from 0.5 to 30 per cent by weight and are present as alkali dispersions. These dispersions are found using any suitable base such as sodium, potassium or ammonium hydroxide. Ammonium hydroxide is the preferred base as this material is fugitive and can leave the coating after application to make a more water-resistant coating. Typically these dispersions comprise from 10 to 40 per cent by weight terpolymer in an aqueous system and have a pH within the range of from 6.5 to 10.0.

The compositions of the present invention should comprise from 0.5 to 30 per cent by weight terpolymer. It is preferred the compositions include 2 to 10 per cent by weight terpolymer and preferably from 2 to 7.5 per cent by weight of terpolymer.

The second component of the coating compositions of the present invention comprises an acrylic emulsion polymer. These emulsion polymers must have a weight average molecular weight as determined by gel permeation chromatography of greater than 20,000. Suitable acrylic emulsion polymers include polymers containing the following monomers: methyl methacrylate, methylacrylate, methylacrylic acid, acrylic acid, itaconic acid, ethyl acrylate, butyl acrylate, ethyl hexyl acrylate, ethyl methacrylate, butyl methacrylate, hydroxy acrylates, hydroxy methacrylates, styrene, alpha-methyl styrene and acrylonitrile. Specific acrylic emulsion polymers include polymers with the following monomer content: copolymers of styrene, ethyl acrylate, 2-ethyl hexyl acrylate and acrylic acid; styrene, butyl methacrylate and methacrylic acid; styrene, methylmethacrylate, ethyl acrylate and methacrylic acid; styrene, methylmethacrylate, ethyl acrylate, butyl acrylate, methacrylic acid and acrylic acid; styrene, methyl methacrylate, butylacrylate and methacrylic acid; styrene, butylmethacrylate and methacrylic acid; styrene, acrylonitrile, 2-ethyl hexyl acrylate and methacrylic acid; methyl methacrylate, 2-ethyl hexyl acrylate and methacrylic acid.

Typically, the above acrylic emulsion polymers contain from 15—75% by weight of at least one hard monomer, i.e. those monomers which produce homopolymers having a Tg of greater than 20°C; 20—70% by weight of at least one soft monomer, i.e. those monomers which produce homopolymers having a Tg of less than 20°C and 3—25% by weight of an acid monomer, i.e. those monomers having carboxyl functionality.

In addition to the acrylic emulsion polymers, other suitable acrylic emulsion polymers include polymers formed by emulsion polymerization in the presence of a low molecular weight resin. These materials include polymers having monomers as listed above which polymerized using an emulsion polymerization action technique in the presence of a low molecular weight, i.e. number average of less than 7,000, resin. Typical resins contain styrene, alpha methyl styrene, acrylates, methacrylates and carbonyl containing monomers and have an acid number within the range of 100—300.

Examples of these resins include: styrene and acrylic acid; styrene, alpha methyl styrene and acrylic acid; styrene, butylacrylate and acrylic acid; alphamethylstyrene, butylacrylate and acrylic acid; styrene,

ethylacrylate and acrylic acid; alphamethylstyrene, ethylacrylate and acrylic acid; styrene, methylmethacrylate and acrylic acid and the like including mixtures. The acrylic emulsion polymers typically contain methylmethacrylate, 2-ethylhexyl acrylate and butylacrylate; styrene and 2-ethylhexyl acrylate; styrene; methylmethacrylate, butyl acrylate and isobutyl methacrylate.

The preferred acrylic emulsion polymers are those prepared by emulsion polymerization in the presence of a low molecular weight acrylic polymer. These materials, when neutralized, have less sensitivity to high pH's and accordingly retain their viscosity characteristics at the pH's of the composition of the present invention. The preferred emulsion polymers include the following: polymers prepared by emulsion polymerization of at least one of methylmethacrylate, butyl methacrylate, styrene, butyl acrylate and 2-ethylhexyl acrylate in the presence of a low molecular weight polymer having number average molecular weight of less than 5,000 and an acid value of 150 to 270.

The emulsion polymers can be prepared in any of a number of conventional emulsion polymerization processes. Suitable processes for producing the emulsion polymers in the presence of the low molecular weight polymer are disclosed in U.S. 4,062,823.

As noted above, emulsion polymers are to be present in an amount of from 1 to 55 per cent by weight. It is preferred that the emulsion polymer is present in an amount of from 20 to 40 per cent by weight and most preferably from 25 to 35 per cent by weight.

The compositions of the present invention also include an aqueous vehicle. The aqueous vehicle includes water and mixtures of water with various water miscible solvents such as 2-butoxyethanol, 2-ethoxyethyl acetate, ethanol, n-propanol, isopropanol 2-ethoxyethanol, aromatic petroleum distillates such as Solvesso 100 and Solvesso 150 from Exxon Corp., esters such as isopropyl acetate, ketones such as methylethylketone, etc. and mixtures thereof. The aqueous vehicle forms the balance of the composition. The preferred aqueous vehicles are mixtures of water, 2-ethoxyethyl acetate, 2-butoxyethanol, mixtures of water and 2-ethoxyethanol, mixtures of water and 2-ethoxyethyl acetate, and mixtures of water, 2-butoxyethanol, and aromatic petroleum distillates. As noted above, water is utilized as a carrier in the composition of the present invention, however, the amount of water should be kept at a minimum, especially if the substrate to be coated is essentially impermeable such as polyethylene film or aluminum or other metal foils. Certain of the above solvents are more water miscible than others. For those solvents with a low degree of water miscibility the amount used as part of the aqueous vehicle should be such that the solvent will not interfere with the stability of the composition. For papers and other cellulosic substrates the water content may be higher as the water can be absorbed by the substrate allowing faster drying times.

In addition to the above three components, the compositions of the present invention can include from 0 to 25 per cent by weight of a slip aid. Suitable slip aids include polyethylene wax emulsions, polytetrafluoroethylene, paraffin wax emulsions, silicone fluids and emulsions and mixtures thereof. These materials are all well known in the coatings industry and are available commercially. Certain slip aid emulsions can be prepared using polyethylene wax and conventional pressure emulsification techniques. Typically, emulsions useful as slip-aids contain from 20 to 50 per cent non-volatiles. These slip-aids are used in the conventional manner in order to improve the slip and handling characteristics of the films.

The compositions of the present invention also can include up to 10 per cent by weight of other optional ingredients including pigments, dyes, fragrance, germicides, fillers, defoamers, surfactants, wetting agents and the like. These components are conventionally used in the industry and can be incorporated into the compositions of the present invention in their conventional additive amounts.

The compositions of the present invention are suitable for coating a wide variety of substrates, including various cellulose substrates such as paper, clay-coated paper, kraft paper, bonded kraft paper, poster board, folding cartons, wood and the like, as well as impermeable substrates such as polyethylene films, polypropylene films, aluminum foil and other metal foils, and other porous and non-porous substrates.

The compositions of the present invention can be coated on these substrates using a variety of methods including roll-coating, flexographic coating, gravure coating, knife coating, squeegee coating, curtain coating and rod coating.

The compositions of the present invention can be prepared by mixing the components together. This mixing can be done at room temperature and elevated pressures or special mixing equipment are not required.

The terpolymers, dispersions and coating compositions of the present invention will now be more fully illustrated by way of the following examples. These examples are for illustration only and are in no way to be considered as limiting.

Example 1

Charge 224 grams of 1-eicosene and 234 grams of cellosolve acetate to a 2000 milliliter reaction flask. Begin stirring and heat the mixture to 140°C. Melt 196 grams of maleic anhydride and then transfer it to a heated dropping funnel. Maintain the maleic anhydride in a molten state. Combine 125 grams of styrene and 15.52 grams of tertiarybutylperbenzoate and then transfer to a second dropping funnel.

Maintain 140°C. and run the reaction under a nitrogen head with continuous stirring, adding the contents of both dropping funnels at an even pace over a one-hour addition period. Upon completion of the

addition, maintain 140°C. for a 45 minute hold period. Pour the contents of the flask into a container. Strip off the solvent by use of a wiped film evaporator to form dry polymer.

An ammonia cut of this polymer is prepared at 10 per cent solids by mixing 200 grams of the polymer prepared above with 89.1 grams of 28 per cent aqueous ammonia and 1710.9 grams distilled water at 70°C. This mixture was stirred for one hour at 70°C. The solution was cooled to room temperature, about 25°C. and had a viscosity of approximately 5.0 centipoise [.05 grams/(cm.×sec.)].

Example 2

Using the procedure of Example 1, the polymers as described in Table 1 were prepared:

TABLE 1

| Polymer | 1-Eicosene | C20—24 1-Alkene | C30+ 1-Alkene | Styrene | Maleic anhydride |
|---|---|---|---|---|---|
| A | — | — | — | 1.0 | 1.0 |
| B | 0.2 | — | — | 0.8 | 1.0 |
| C | 0.4 | — | — | 0.6 | 1.0 |
| D | 0.6 | — | — | 0.4 | 1.0 |
| E | 0.8 | — | — | 0.2 | 1.0 |
| F | 1.0 | — | — | — | 1.0 |
| G | — | 0.2 | — | 0.8 | 1.0 |
| H | — | 0.4 | — | 0.6 | 1.0 |
| I | — | 0.6 | — | 0.4 | 1.0 |
| J | — | 0.8 | — | 0.2 | 1.0 |
| K | — | 1.0 | — | — | 1.0 |
| L | — | — | 0.2 | 0.8 | 1.0 |
| M | — | — | 0.4 | 0.6 | 1.0 |
| N | — | — | 0.6 | 0.4 | 1.0 |
| O | — | — | 0.8 | 0.2 | 1.0 |
| P | — | — | 1.0 | — | 1.0 |

Each of the polymers were dried either using a wipe film evaporator or evaporating the solvent off in an oven.

The molecular weights of the polymers were determined by Gel Permeation Chromatography. The polymers had the molecular weights as shown below in Table 2.

TABLE 2

| Polymer | $M_n$ | $M_w$ | $M_z$ |
|---|---|---|---|
| A | 1390 | 2680 | 4790 |
| B | 2150 | 4940 | 8910 |
| C | 2990 | 7500 | 16740 |
| D | 3030 | 6990 | 13220 |
| E | 3140 | 6450 | 11000 |
| F | 2640 | 4610 | 6910 |
| G | 4250 | 15660 | 43750 |
| H | 3900 | 14550 | 41470 |
| I | 3300 | 11800 | 29500 |
| J | 2640 | 8980 | 20160 |
| K | 1850 | 5420 | 10130 |
| L | 3820 | 14750 | 39440 |
| M | 2850 | 10750 | 26880 |
| N | 2620 | 8360 | 18400 |
| O | 1870 | 5650 | 12380 |
| P | 1530 | 3950 | 8100 |

Example 3

10 per cent of the polymers described in Table 1 were neutralized using 28 per cent ammonia to 100 per cent neutralization. The polymers were neutralized at three temperatures: 27°C, 40°C, and 70°C. After one hour of shaking or stirring, the viscosity was measured at 25°C. using both the Brookfield viscometer and the Nametre viscometer. The viscosity readings are shown in Table 2. For those polymers which had a relatively low viscosity at low temperature, the runs were not repeated at higher temperatures since the viscosity, once it reaches the range from 5 to 20 centipoise, [.05 to .20 grams/(cm.×sec.)] stabilizes and shows no further decrease. Furthermore, once the viscosity was reduced to within the above range by heating, the cooled solution maintained that low viscosity.

TABLE 3

| Polymer | Temp. °C | Viscosity Cps. [grams/(cm.×sec.)] Brookfield | | Nametre | | Time |
|---|---|---|---|---|---|---|
| A | 27 | 5.0 | (.05) | 2.8 | (.028) | 1 hour |
| B | 27 | 20.4 | (.204) | 18.1 | (.181) | 1 hour |
| C | 27 | 460,000 | (4,600) | 5,800 | (58) | 1 hour |
| D | 27 | 6,000 | (160) | 57.6 | (.576) | 1 hour |
| E | 27 | 22.2 | (.222) | 10.0 | (.100) | 1 hour |
| F | 27 | 59.0 | (.59) | 30.8 | (.308) | 1 hour |
| C | 40 | 2,600 | (26) | — | | 1 hour |
| D | 40 | 9.3 | (.093) | 6.9 | (.069) | 1 hour |
| E | 40 | 6.4 | (.064) | 3.9 | (.039) | 1 hour |
| F | 40 | 6.5 | (.065) | 3.9 | (.039) | 1 hour |
| C | 70 | 5.0 | (.05) | 2.8 | (.028) | 1 hour |
| G | 70 | 11.5 | (.115) | 8.6 | (.086) | 2 hours |
| H | 70 | 12.8 | (.128) | 5.7 | (.057) | 1 hour |
| I | 70 | 6.0 | (.06) | 2.5 | (.025) | 1 hour |
| J | 70 | 5.5 | (.055) | 2.0 | (.020) | 1 hour |
| K | 70 | 7.0 | (.070) | 4.6 | (.046) | 1.5 hours |
| L | 70 | 79,250 | (792.5) | 1740 | (17.4) | 1.5 hours |
| M | 70 | 880 | (8.80) | 96.5 | (.965) | 1 hour |
| N | 70 | 8.8 | (.088) | 5.6 | (.056) | 1 hour |
| O | 70 | 12.5 | (.125) | 3.0 | (.030) | 1 hour |
| P | 70 | 6.3 | (.063) | 2.4 | (.024) | 2 hours |

Except for Polymers K, N, O, and P, each of the polymer resin cuts described in Table 2 were clear indicating complete solubilization. It is interesting to note that even the very viscous cuts were substantially clear.

Example 4

Charge 224 grams of 1-eicosene and 244 grams of cellosolve acetate to a 2000 milliliter reaction flask. Begin stirring and heat the mixture to 140°C. Melt 204.2 grams of maleic anhydride and then transfer it to a heated dropping funnel. Maintain the maleic anhydride in a molten state. Combine 125 grams of styrene, 15.52 grams of tertiarybutylperbenzoate and 5.45 grams of divinyl benzene (9.90 grams of 55 per cent material) and then transfer to a second dropping funnel.

Maintain 140°C. and run the reaction under a nitrogen head with continuous stirring, adding the contents of both dropping funnels at an even pace over a one-hour addition period. Upon completion of the addition, maintain 140°C. for a 45 minute hold period. Pour the contents of the flask into a container. Strip off the solvent by use of a wiped film evaporator to form the dry polymer.

An ammonia cut of this polymer was prepared at 10 per cent solids by mixing 200 grams of the above polymer with 89.1 grams of 28 per cent aqueous ammonia and 1710.9 grams of distilled water. This mixture

was stirred for one hour at 70°C. The resulting solution was cooled to room temperature and had a viscosity of about 5.0 centipoise [.05 grams/(cm.×sec.)] at 25°C.

Example 5

Using the procedure of Example 4, the following polymers, as set forth in Table 4, were prepared.

TABLE 4

| Polymer | Styrene (moles) | 1-Eicosene (moles) | Maleic anhydride (moles) | Divinyl benzene (% by weight) |
|---|---|---|---|---|
| Q | 1.0 | 0.0 | 1.0 | 1.0 |
| R | 0.8 | 0.2 | 1.0 | 1.0 |
| S | 0.6 | 0.4 | 1.0 | 1.0 |
| T | 0.4 | 0.6 | 1.0 | 1.0 |
| U | 0.2 | 0.8 | 1.0 | 1.0 |
| V | 0.0 | 1.0 | 1.0 | 1.0 |

The molecular weight of the above resins were determined by gel permeation chromatography and have the number average molecular weight, weight average molecular weight and Z average molecular weight as shown in Table 5.

TABLE 5

| Polymer | $M_n$ | $M_w$ | $M_z$ |
|---|---|---|---|
| Q | 1810 | 4320 | 9100 |
| R | 3240 | 10550 | 42980 |
| S | 3410 | 11620 | 66570 |
| T | 3580 | 10210 | 35910 |
| U | 3340 | 7850 | 16370 |
| V | 2940 | 5850 | 9920 |

Example 6

10 per cent non-volatile ammonia cuts of the polymers of Example 5 were made using 28 per cent aqueous ammonia to obtain 100 per cent neutralization. These materials were neutralized at three temperatures: 27°C., 40°C., and 70°C. At lower temperatures certain of the resins, as noted in Table 6, did not dissolve fully after one day. For those polymer solutions with a viscosity of less than 70 (.70 grams/[cm.×sec.]) centipoise, the viscosity at 25°C. remained low after cooling to room temperature.

TABLE 6

| Polymer | Temp. °C | Viscosity Cps. (grams/[cm.×sec.]) Brookfield | | Nametre | | Time | Notes |
|---|---|---|---|---|---|---|---|
| Q | 27 | 5.0 | (.05) | 3.6 | (.036) | 1 hour | |
| R | 27 | 67.4 | (.674) | 30.0 | (.30) | 1 hour | |
| S | 27 | 710,000 | (7100) | 22,400 | (224) | 1 hour | 1, 2 |
| T | 27 | 288,000 | (2880) | 1,680 | (16.80) | 1 hour | 1, 3 |
| U | 27 | — | | — | | 1 hour | 4 |
| V | 27 | 625 | (6.25) | 67 | (.67) | 1 hour | |
| S | 40 | 2600 | (26.00) | — | | 1 hour | 5 |
| T | 40 | 9.3 | (.093) | 6.9 | (.069) | 1 hour | |
| U | 40 | 6.4 | (.064) | 3.9 | (.039) | 1 hour | |
| V | 40 | 6.5 | (.065) | 3.9 | (.039) | 1 hour | |
| S | 70 | 3.8 | (.038) | 2.5 | (.025) | 1 hour | |

Notes

1—Not all dissolved after one day.
2—Brookfield viscosity after 2 months=7,300 cps.
3—Brookfield viscosity after 2 months=11,500 cps.
4—Not all dissolved after one day, no one hour reading taken, Brookfield viscosity after 2 months=540 cps.
5—Brookfield viscosity after 4 days=30.0 cps.

| | |
|---|---|
| 2a—7,300 cps. | [73 g/(cm.×sec.)] |
| 3a—11,500 cps. | [11.5 g/(cm.×sec.)] |
| 4a—540 cps. | [5.4 g/(cm.×sec.)] |
| 5a—30.0 cps. | [.30 g/(cm.×sec.)] |

Example 7

Charge 224 grams of 1-eicosene and 244 grams of ethoxyethanol acetate to a 2000 milliliter reaction flask. Begin stirring and heat the mixture to 140°C. Melt 204.2 grams of maleic anhydride and then transfer it to a heated dropping funnel. Maintain the maleic anhydride in a molten state.

Combine 125 grams of styrene, 15.52 grams of tertiary butyl perbenzoate and 9.90 grams of divinyl benzene (55% active) and then transfer to a second dropping funnel.

Maintain 140°C. and run the reaction under a nitrogen head with continuous stirring, adding the contents of both dropping funnels at an even pace over a one-hour addition period. Upon completion of the addition, maintain 140°C. for a 45 minute hold period. Pour the contents of the flask into a container. Strip off the solvent by use of a wiped film evaporator to form the dry polymer.

An ammonia cut of this polymer was prepared at 25 per cent solids by mixing 200 grams of the above polymer with 89.1 grams of 28 per cent aqueous ammonia and 510.9 grams of distilled water. This mixture was stirred for one hour at 70°C. The resulting solution was cooled to room temperature and had a viscosity of about 430 centipoise [4.30 grams/(cm.×sec.)] measured at 25°C.

Example 8

A non-blocking overprint varnish having the following composition was prepared:

| | |
|---|---|
| Polymer of Example 7 (25% Solids) | 13.00% |
| Polyethylene Wax Emulsion (25% Solids) (JONWAX 26 (TM) available from S. C. Johnson & Son, Inc.) | 5.00 |
| Paraffin-Polyethylene Wax Emulsion (34% Solids) (JONWAX 120 (TM) available from S. C. Johnson & Son, Inc.) | 10.00 |
| Emulsion polymer containing styrene, 2-ethylhexyl acrylate alpha methylstyrene and acrylic acid (Joncryl 537 (TM) available from S. C. Johnson & Son, Inc.) (46% Solids) | 63.00 |
| 2-butoxyethanol | 6.30 |
| Solvesso 150 (TM) (Petroleum Naphta-Exxon Corp) | 0.70 |
| HV-490 (TM) (50% Silicone Emulsion-Down Corning) | 2.00 |

The above formulation was coated on card stock at a coating weight of about ,000244 grams/sq. cm. (0.5 pounds per 1,000 square feet) dry coating weight. This coating was clear and had a good gloss with good slip properties. This coated stock was subjected to a blocking test and did not block when stacked coating face to coating face and coating face to noncoated stock at 1406.1 grams/sq. cm. (20 psi) at 63°C (150°F) for 24 hours. A second blocking test at 121.1°C (250°F) under 2109.2 grams/sq. cm. for 2 seconds also did not cause blocking. It also demonstrated high slip (low static slide angle) when tested coated surface to coated surface. The slide angle was determined by placing a sample of the coated card stock on a 500 gram block and a second sample of coated card stock on the bed of a Cenco Incline Plane. The block is placed on the plane and the plane is gradually elevated; the angle at which the block begins to slide is the static slide angle. Readings of 9° to 12° are achieved with this coating as compared to 15° to 18° for acrylic systems without the polymer of Example 7.

Example 9

A further overprint formulation with the following formulation was prepared:

| | |
|---|---|
| Polymer of Example 7 (25% Solids) | 15.00% |
| Emulsion polymer containing styrene, acrylonitrile, 2-ethylhexylacrylate and methacrylic acid (RHOPLEX WL-91 (TM) from Rohm & Haas) (50% Solids) | 62.00 |
| 2-butoxyethanol | 6.00 |
| HV-490 (TM) Silicone Emulsion (50% Solids) | 2.00 |
| Polyethylene wax emulsion (25% Solids) (JONWAX 26) | 5.00 |
| Paraffin polyethylene wax emulsion (34% Solids) (JONWAX 120) | 10.00 |

This formulation when coated on card stock had better solvent resistance than the formulation of Example 8. Other properties were similar.

Example 10

A formulation which is useful as an ink is prepared having the following formulation:

| | |
|---|---|
| Polymer of Example 7 (25% Solids) | 10.00% |
| Emulsion polymer* (40% Solids) | 58.77 |
| Urea | 11.25 |
| 67% Styrene/33% Acrylic Acid resin (Mw 4,000) (27% Solids) | 19.98 |

* 10% Methacrylic acid, 5% acrylic acid, 22% methylmethacrylate, 4% Styrene, 57% Ethyl acrylate and 2% butyl acrylate.

This formulation when used as an ink had good scuff and rub resistance and had similar blocking properties as the formula of Example 8.

Example 11

Example 8 was repeated except the emulsion polymer was replaced by the following commercially available emulsion polymers.

a) Acrysol 153 from Rohm & Haas;

b) 22-1271 from Zimchem; and

c) 1052 from Polyvinyl Chemicals

The above formulations were coated on card stock and evaluated as in Example 8. The 153 polymer had fair slip and non-blocking properties but had lower gloss than Example 8. The 22-1271 polymer had good slip and non-blocking properties but had only fair gloss. The 1052 polymer had good slip, non-blocking and gloss properties.

**Claims**

1. A terpolymer characterized as comprising from 49 to 60 mole percent of an anhydride, 20 or more mole percent of monoalkenyl aromatic compounds selected from the group consisting of styrene, alphamethyl styrene, vinyl toluene and mixtures thereof; and 20 or more mole percent of at least one 1-alkene having at least 18 carbon atoms.

2. The terpolymer of claim 1, characterized in that the terpolymer is present in an aqueous alkaline dispersion, wherein the dispersion has a viscosity at 25° of less than 20 centipoise (.20 grams/(cm.×sec.)), said dispersion being 10 percent by weight terpolymer and having a pH within the range of from 6.5 to 10.

3. The terpolymer of claim 1 or 2, characterized in that the anhydride is maleic anhydride.

4. The terpolymer of any of claims 1 to 3, characterized in that the higher 1-alkene is 1-eicosene or a mixture of 1-alkenes having from 20 to 24 carbon atoms.

5. The terpolymer of any of the preceding claims, characterized by comprising from 49 to 60 mole percent maleic anhydride, 20 or more mole percent styrene and 20 or more mole percent of at least one 1-alkene having at least 18 carbon atoms.

6. A coating composition, characterized as comprising: (a) from 0.5 to 30% by weight of a terpolymer which comprises (i) from 49 to 60 mole percent of anhydride; (ii) 20 or more mole percent of monoalkenyl aromatic compounds selected from the group consisting of styrene, alphamethyl styrene, vinyl toluene and mixtures thereof; and (iii) 20 or more mole percent of at least one 1-alkene having at least 18 carbon atoms; (b) from 1 to 55 percent by weight of an emulsion polymer having a weight average molecular weight of greater than 20,000; and (c) the balance being an aqueous vehicle, preferably a mixture of water and an organic solvent.

7. The composition of claim 6, characterized in that the anhydride is maleic anhydride.

8. The composition of claim 6 or 7, characterized in that the monoalkenyl aromatic compound is styrene.

9. The composition of any of claims 6 to 8, characterized in that the terpolymer is present in an amount of from 2 to 10 percent by weight, preferably 2 to 7.5 percent by weight, the emulsion polymer is present in an amount of from 20 to 40 percent by weight, preferably from 25 to 35 percent by weight.

10. The composition of any of claims 6 to 9, characterized in that the composition includes an effective amount of a slip aid, preferably polyethylene wax emulsion, polytetrafluoroethylene, paraffin wax emulsions, silicone fluids and emulsions, and mixtures thereof.

**Patentansprüche**

1. Terpolymer, dadurch gekennzeichnet, daß es 49 bis 60 Mol-% eines Anhydrids enthält, ferner 20 oder mehr Mol-% monoalkyl-aromatische Verbindungen, die aus der Gruppe ausgewählt sind, die aus Styrol, α-Methylstyrol, Vinyltoluol und Gemischen derselben besteht, ferner 20 oder mehr Mol-% mindestens einen 1-Alkens mit mindestens 18 Kuhlenstoffatomen.

2. Terpolymer nach Anspruch 1, dadurch gekennzeichnet, daß das Terpolymer in einer wäßrigen alkalischen Dispersion vorliegt, die bei 25° eine Viskosität von mindestens 20 Centipoise (0,20 g/(cm s) hat, 10 Gew.% Terpolymer enthält und einen pH-Wert im Bereich von 6,5 bis 10 hat.

3. Terpolymer nach Anspruch 1 oder 2, dadurch gekennzeichnet, daß das Anhydrid Maleinsäureanhydrid ist.

4. Terpolymer nach einem der Ansprüche 1 bis 3, dadurch gekennzeichnet, daß das höhere 1-Alken 1-Eicosen oder ein Gemisch von 1-Alkenen mit 20 bis 24 Kohlenstoffatomen ist.

5. Terpolymer nach einem der vorhergehenden Ansprüche, dadurch gekennzeichnet, daß es 49 bis 60 Mol-% Maleinsäureanhydrid, 20 oder mehr Mol-% Styrol und 20 oder mehr Mol-% mindestens einen 1-Alkens mit mindestens 18 Kohlenstoffatomen enthält.

6. Überzugszusammensetzung, dadurch gekennzeichnet, daß sie enthält: (a) 0,5 bis 30 Gew.% eines Terpolymers, das enthält: (i) 49 bis 60 Mol-% Anhydrid, (ii) 20 oder mehr Mol-% monoalkyl-aromatische Verbindungen, die aus der Gruppe ausgewählt sind, die aus Styrol, α-Methylstyrol, Vinyltoluol und Gemischen derselben besteht, (iii) 20 oder mehr Mol-% mindestens eines 1-Alkens mit mindestens 18 Kohlenstoffatomen; (b) 1 bis 55 Gew.% eines Emulsionspolymers mit einem gewichtsdurchschnittlichen Molekulargewicht über 20 000; (c) als Rest einem wäßriges Dispersionsmittel, das vorzugsweise aus einem Gemisch von Wasser und einem organischen Lösungsmittel besteht.

7. Zusammensetzung nach Anspruch 6, dadurch gekennzeichnet, daß das Anhydrid Maleinsäureanhydrid ist.

8. Zusammensetzung nach Anspruch 6 oder 7, dadurch gekennzeichnet, daß die monoalkenyl-arom. Verbindung Styrol ist.

9. Zusammensetzung nach einem der Ansprüche 6 bis 8, dadurch gekennzeichnet, daß das Terpolymer in einer Menge von 2 bis 10 Gew.%, vorzugsweise 2 bis 7,5% und das Emulsionspolymerisat in einer Menge von 20 bis 40 Gew.% vorzugsweise von 25 bis 35 Gew.%, vorhanden ist.

10. Zusammensetzung nach einem der Ansprüche 6 bis 9, dadurch gekennzeichnet, daß die Zusammensetzung eine wirksame Menge eines Gleitmittels enthält, das vorzugsweise aus einer

Polyethylenwachsemulsion, Polytetrafluorethylen, Paraffinwachsemulsionen, Silikonfluiden und -emulsionen und Gemischen derselben besteht.

**Revendications**

1. Terpolymère caractérisé en ce qu'il comprend de 49 à 60% molaires d'un anhydride, 20% molaires ou plus de composés aromatiques monoalcényliques choisis dans le groupe constitué par le styrène, l'α-méthylstyrène, le vinyltoluène et leurs mélanges et 20% molaires ou plus d'au moins un 1-alcène ayant au moins 18 atomes de carbone.

2. Terpolymère selon la revendication 1, caractérisé en ce qu'il est présent dans une dispersion alcaline aqueuse, cette dispersion ayant une viscosité à 25°C inférieure à 20 centipoises (0,20 g/(cm×s)), ladite dispersion contenant 10% en poids de terpolymère et ayant un pH dans la gamme de 6,5 à 10.

3. Terpolymère selon la revendication 1 ou 2, caractérisé en ce que l'anhydride est l'anhydride maléique.

4. Terpolymère selon l'une quelconque des revendications 1 à 3, caractérisé en ce que le 1-alcène supérieur est le 1-eicosène ou un mélange de 1-alcènes ayant de 20 à 24 atomes de carbone.

5. Terpolymère selon l'une quelconque des revendications précédentes, caractérisé en ce qu'il comprend 49 à 60% molaires d'anhydride maléique, 20% molaires ou plus de styrène et 20% molaires ou plus d'au moins un 1-alcène ayant au moins 18 atomes de carbone.

6. Composition de revêtement, caractérisée en ce qu'elle comprend: (a) de 0,5 à 30% en poids d'un terpolymère qui comprend (i) 49 à 60% molaires d'anhydride; (ii) 20% molaires ou plus de composés aromatiques monoalcényliques choisis dans le groupe constitué par le styrène, l'α-méthylstyrène, le vinyltoluène et leurs mélanges; et (iii) 20% molaires ou plus d'au moins un 1-alcène ayant au moins 18 atomes de carbone; (b) 1 à 55% en poids d'un polymère d'émulsion ayant une moyenne en poids du poids moléculaire supérieure à 20 000; et (c) le reste étant un véhicule aqueux, de préférence un mélange d'eau et d'un solvant organique.

7. Composition selon la revendication 6, caractérisée en ce que l'anhydride est l'anhydride maléique.

8. Composition selon la revendication 6 ou 7, caractérisée en ce que le composé aromatique monoalcénylique est le styrène.

9. Composition selon l'une quelconque des revendications 6 à 8, caractérisée en ce que le terpolymère est présent en une quantité de 2 à 10% en poids, de préférence de 2 à 7,5% en poids et le polymère d'émulsion est présent en une quantité de 20 à 40% en poids, de préférence de 25 à 35% en poids.

10. Composition selon l'une quelconque des revendications 6 à 9, caractérisée en ce qu'elle contient une quantité efficace d'un aide de glissance, de préférence une émulsion de cire de polyéthylène, un polytétrafluoroéthylène, des émulsions de cire de paraffine, des huiles et émulsions de silicone et leurs mélanges.